# EUROPEAN PATENT APPLICATION

(11) **EP 4 746 302 A1**
(43) Date of publication of application: **20.05.2026**
(21) Application number: 24213016.9
(22) Date of filing: 14.11.2024
(51) Int. Cl.: H04B 1/04

(54) **SWITCHED-CAPACITOR POWER AMPLIFIER POWER CONTROL**

(71) Applicant: Huawei Technologies Co., Ltd., Shenzhen, Guangdong 518129 (CN)
(72) Inventor: Klein, Shaul, 80992 Munich (DE); Ben-Arie, Yaron, 80992 Munich (DE); Basson, Nadav, 80992 Munich (DE)
(74) Representative: Roth, Sebastian

(57) **Abstract**

This disclosure relates to power control in wireless data transmission. A power control method is disclosed. The method comprises adjusting an amplitude of a digital baseband signal and/or a power supply voltage of a switched capacitor power amplifier (SCPA); and generating, by the SCPA, a radio frequency (RF) signal based on the adjusted digital based signal. The adjustment of the amplitude of the digital baseband signal prioritizes the signal quality performance (EVM). The adjustment of the SCPA power supply prioritizes the transmission efficiency. According to the disclosed method, different mechanisms may be employed to ensure a desired system performance while performing output power control.

## Description

### TECHNICAL FIELD

The present disclosure generally relates to the field of wireless communications. For instance, the present disclosure provides a power control method applied to a switched-capacitor power amplifier and related apparatus.

### BACKGROUND

Wireless communication technologies, such as Wi-Fi based on IEEE 802.11 standard, are widely used in various environments including homes, offices, and outdoor spaces. Wireless communication systems typically operate in multiple frequency bands. For instance, Wi-Fi systems typically operate in 2.4 GHz, 5 GHz, and more recently, 6 GHz bands, facilitating communication between access points (APs) and various client devices such as computers, smartphones, and IoT devices.

### SUMMARY

A critical challenge in deploying access points is managing power consumption while maintaining optimal performance. This challenge becomes particularly acute in scenarios involving outdoor installations where extreme temperatures are expected, or limited power supply infrastructure. Access points shall also comply with various regulatory requirements regarding energy efficiency and operate reliably under diverse environmental conditions.

In Wi-Fi systems, the transmitter (TX) path typically accounts for 35-45% of the total access point power consumption. Traditional TX paths employ analog power amplifiers and utilize two primary methods for adjusting transmission power: modifying the digital baseband signal level at the digital-to-analog converter (DAC) output, or adjusting the gain of the upconverter chain. However, these conventional approaches maintain relatively constant power consumption regardless of the output power setting, leading to inefficient operation particularly at lower power levels.

In view of the above, an objective of this disclosure is to optimize power consumption in SCPA-based wireless communication devices. Further objectives may include enabling more efficient operation while maintaining appropriate levels of performance under varying environmental and power supply conditions.

This and other objectives are achieved by the solutions of the present disclosure, as described in the independent claims. Advantageous implementations are further defined in the dependent claims.

According to a first aspect, the present disclosure a power control method for wireless data transmission. The method comprising: adjusting an amplitude of a digital baseband signal and/or a power supply voltage of a SCPA; and generating, by the SCPA, a radio frequency, RF, signal based on the digital baseband signal.

Optionally, the adjustment of the amplitude of the digital baseband signal may be performed by the SCPA. Alternatively, the adjustment of the amplitude of the digital baseband signal may be performed by a module (e.g., a modem) other than the SCPA. In this case, the SCPA receives the adjusted digital baseband signal.

Optionally, the adjustment of the amplitude of the digital baseband signal can be done through applying a backoff level (e.g., in a unit of dB) to the digital baseband signal (simply referred to as a baseband (BB) backoff). For instance, if a backoff level N dB is applied, the amplitude of the digital baseband signal is accordingly reduced by N dB.

The power consumption of a transmission path differs between the adjustment of the amplitude of the digital baseband signal and the adjustment of the SCPA power supply level. For instance, to achieve a same output power, the transmission efficiency is higher with a lower SCPA power supply level (without adjusting the digital baseband signal) when compared to a higher SCPA power supply level with reducing the amplitude of digital baseband signal.

In general, the adjustment of the amplitude of the digital baseband signal prioritizes the signal quality performance (EVM). The adjustment of the SCPA power supply prioritizes the transmission efficiency. In this way, different mechanisms may be employed to ensure a desired system performance while performing output power control.

In an implementation form of the first aspect, adjusting the amplitude of the digital baseband signal and/or the power supply voltage of the SCPA comprises: adjusting the power supply voltage of the SCPA without adjusting the amplitude of the digital baseband signal.

In this way, the transmission efficiency can be ensured or prioritized.

In a further implementation form of the first aspect, adjusting the amplitude of the digital baseband signal and/or the power supply voltage of the SCPA comprises:
adjusting the amplitude of the digital baseband signal without adjusting the power supply voltage of the SCPA.

In this way, the signal quality performance (EVM) can be ensured or prioritized.

In a further implementation form of the first aspect, the SCPA is comprised in a wireless communication device, wherein the wireless communication device comprises a modem configured to generate and provide the digital baseband signal to the SCPA, wherein the amplitude of the digital baseband signal is adjusted by the modem or the SCPA.

In a further implementation form of the first aspect, the method comprises:
monitoring power consumption and/or temperature of the wireless communication device during operation;
wherein the amplitude of the digital baseband signal and/or the power supply voltage of the SCPA is adjusted when the power consumption or the temperature exceeds a predefined threshold.

In a further implementation form of the first aspect, when the power consumption or temperature does not exceed the predefined threshold, the method comprises adjusting the amplitude of the digital baseband signal while setting the power supply voltage of the SCPA at a maximum level.

In a further implementation form of the first aspect, before operation, the method comprises:
obtaining power supply limit information of the wireless communication device; and
generating a calibration table by scanning internal power consumption of the SCPA through transmitting a plurality of physical protocol data units, PPDUs, while setting an output power of the wireless communication device corresponding to various amplitude adjustments of the digital baseband signal and various power supply voltage adjustments of the SCPA,
such that when the power consumption or temperature exceeds the predefined threshold during operation, the amplitude of the digital baseband signal and/or the power supply voltage of the SCPA is adjusted based on the calibration table.

A second aspect of this disclosure provides an SCPA configured to adjust an amplitude of a digital baseband signal and/or a power supply voltage of the SCPA; and generate a RF signal based on the digital baseband signal.

In an implementation form of the second aspect, for adjusting the amplitude of the digital baseband signal and/or the power supply voltage of the SCPA, the SCPA is configured to: adjust the power supply voltage of the SCPA without adjusting the amplitude of the digital baseband signal.

In a further implementation form of the second aspect, for adjusting the amplitude of the digital baseband signal and/or the power supply voltage of the SCPA, the SCPA is configured to:
adjust the amplitude of the digital baseband signal without adjusting the power supply voltage of the SCPA.

The SCPA of the second aspect may share the same features and advantages as the method of the first aspect.

A third aspect of this disclosure provides a wireless communication device. The wireless communication device comprises at least one SCPA. The wireless communication device is configured to adjust an amplitude of a digital baseband signal and/or a power supply voltage of the at least one SCPA. The at least one SCPA is configured to generate an RF signal based on the digital baseband signal.

In an implementation form of the third aspect, the wireless communication device further comprises at least one modem. The at least SCPA is connected with the at least one modem. The at least one modem is configured to generate and provide the digital baseband signal to the at least one SCPA.

Optionally, the adjustment of the amplitude of the digital baseband signal may be performed by the at least one SCPA. However, the adjustment of the amplitude of the digital baseband signal is not necessarily performed by the at least one SCPA. Alternatively, the adjustment of the amplitude of the digital baseband signal may be performed by the at least one modem. In this case, the modem is configured to generate the digital baseband signal, and adjust the amplitude of the generated digital baseband signal. Then, the at least one modem is configured provide the adjusted digital baseband signal to the at least one SCPA for generating the RF signal.

In a further implementation form of the third aspect, the device is configured to:
monitor power consumption and/or temperature of the wireless communication device during operation; and
adjust the amplitude of the digital baseband signal and/or the power supply voltage of the SCPA when the power consumption or the temperature exceeds a predefined threshold.

In a further implementation form of the third aspect, when the power consumption or temperature does not exceed the predefined threshold, the device is configured to adjust the amplitude of the digital baseband signal while setting the power supply voltage of the SCPA at a maximum level.

In a further implementation form of the third aspect, before operation, the device is configured to:
obtain power supply limit information of the device; and
generate a calibration table by scanning internal power consumption of the SCPA through transmitting a plurality of physical protocol data units, PPDUs, while setting an output power of the wireless communication device corresponding to various amplitude adjustments of the digital baseband signal and various power supply voltage adjustments of the SCPA.

When the power consumption or temperature exceeds the predefined threshold during operation, the device is configured to adjust the amplitude of the digital baseband signal and/or the power supply voltage of the SCPA based on the calibration table.

In a further implementation form of the third aspect, the device is a Wi-Fi module, such as a Wi-Fi AP.

The wireless communication device of the third aspect may share the same features and advantages as the method of the first aspect or as the SCPA of the second aspect.

A fourth aspect of this disclosure provides a communication system comprising at least one wireless communication device according to the third aspect.

A fifth aspect of the present disclosure provides a computer program product comprising a program code for performing the method according to the first aspect or any implementation form thereof, when executed on a computer.

A sixth aspect of the present disclosure provides a computer-readable medium comprising instructions which, when executed by a computer, cause the computer to carry out the method according to the first aspect or any implementation form thereof.

A seventh aspect of the present disclosure provides a chipset comprising instructions which, when executed by the chipset, cause the chipset to carry out the method according to the first aspect or any implementation form thereof.

It has to be noted that all apparatus, devices, elements, units, and means described in the present application could be implemented in software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity, which performs that specific step or functionality, it should be clear for a skilled person that these methods and functionalities may be implemented in respective software or hardware elements, or any kind of combination thereof.

### BRIEF DESCRIPTION OF DRAWINGS

The above-described aspects and implementation forms will be explained in the following description of specific embodiments in relation to the enclosed drawings, in which:
- FIG. 1: shows a schematic diagram of an SCPA;
- FIG. 2: shows a wireless communication device; and
- FIG. 3: shows a diagram of a power control method for wireless data transmission.

### DETAILED DESCRIPTION OF EMBODIMENTS

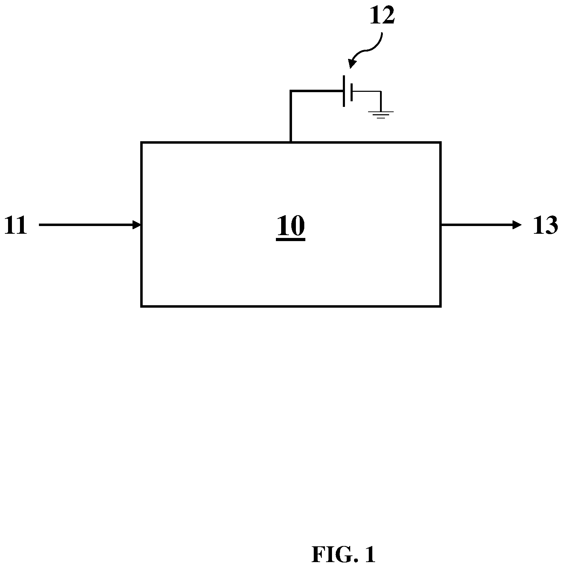

FIG. 1 shows a schematic diagram of an SCPA 10. The SCPA 10 is used for generating an RF signal 13 on a transmission (TX) path. The SCPA 10 according to this disclosure is configured to adjust the amplitude of the digital baseband signal 11 and/or a power supply voltage 12, and generate the RF signal 13 based on the digital baseband signal 11.

The output power of an SCPA may be controlled through the following two mechanisms: adjusting the digital baseband input level (e.g., by applying baseband backoff) or modifying the power supply voltage (Vdd) level. Each of these methods presents distinct trade-offs between power efficiency and signal quality performance.

By reducing the power supply voltage without adjusting the amplitude of the digital baseband signal 11 (e.g., without baseband backoff) in order to achieve a designated output power, the power efficiency can be ensured or prioritized (i.e., the power efficiency in this case is higher compared to a higher power supply voltage with adjusting the amplitude of digital baseband signal in order to achieve the same designated output power).

By keeping the power supply voltage constant at an allowable maximum level (e.g., at a rated voltage or nominal voltage of the SCPA) and only adjusting the amplitude of the digital baseband signal to achieve a required output power level, the signal quality performance is superior than other means to achieve the same required output power level.

The trade-off between power efficiency and signal quality performance is taken account of in power control of the SCPA. The ability to dynamically select the appropriate power control mechanism, based on current operating conditions and requirements, is beneficial for maintaining optimal system performance under various environmental and regulatory constraints.

Optionally, the SCPA 10 may be configured to adjust the power supply voltage 12 without adjusting the amplitude of the digital baseband signal 11. For instance, the SCPA 10 may be configured to reduce the power supply voltage 12 without adjusting the amplitude of the digital baseband signal 11, so as to ensure or prioritize transmission power efficiency.

Alternatively, the SCPA 10 may be configured to adjust the amplitude of the digital baseband signal 11 without adjusting the power supply voltage 12. For instance, the SCPA 10 may be configured to increase the backoff level of the digital baseband signal 11 (i.e., decrease the amplitude of the digital baseband signal 11) without adjusting the power supply voltage 12, so as to ensure or prioritize signal quality.

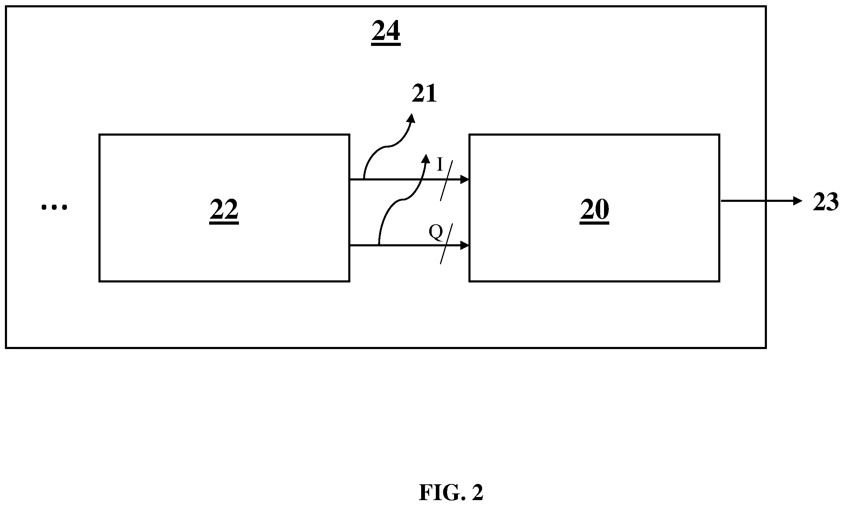

FIG. 2 shows a wireless communication device 24. The wireless communication device comprises at least one modem 22 (in the following, "the modem 22" and at least one SCPA 20 (in the following, "the SCPA 20"). The modem 22 and the SCPA 20 are connected. In general, the modem 22 is configured to generate a digital baseband signal 21 and provide the digital baseband signal 21 to the SCPA 20. The digital baseband signal 21 may comprise an in-phase component (labelled as "I") and a quadrature component (labelled as "Q"). The SCPA 20 is configured to generate an RF signal 23 based on the digital baseband signal.

For controlling output power of the RF signal, the wireless communication device 24 is configured to adjust an amplitude of the digital baseband signal 21 and/or a power supply voltage of the SCPA 20.

Either the modem 22 or the SCPA 20 may be configured to adjust the amplitude of the digital baseband signal 21.

If the SCPA 20 is configured to adjust the amplitude of the digital baseband signal 21, the SCPA 20 may be built based on the SCPA 10 in FIG. 1. They share the same optional features and function likewise.

If the modem 22 is configured to adjust the amplitude of the digital baseband signal 21, then the adjusting mechanism introduced in FIG. 1 with respect to the SCPA 10 may be similarly applied to the modem 22, which are not repeated herein.

During operation of the wireless communication device 24, power consumption and/or temperature of the wireless communication device 24 may be monitored. If the power consumption or the temperature exceeds a predefined threshold, the wireless communication device 24 may be configured to adjust the amplitude of the digital baseband signal and/or the power supply voltage of the SCPA.

The following Table 1 shows various simulations of EVM and transmission efficiency when adjusting the amplitude of the baseband signal (BB backoff) and/or adjusting the power supply voltage (Vdd) of the SCPA. Pout is a desired/designated output power. It is noted that the specific values in Table 1 are merely examples and are for illustration purposes only, and should not be construed as limiting the scope of the present disclosure. It should be understood that various modifications, device settings, wireless environments, and the like may produce different results.

**Table 1**

| **Pout [dBm]** | **Vdd [V]** | **BB backoff [dB]** | **Efficiency [%]** | **EVM [dB]** |
|---|---|---|---|---|
| 27 | 5.0 | 0 | 55 | 36 |
| 24 | 5.0 | 3 | 45.1 | 35 |
| 24 | 3.7 | 0 | 49.4 | 30 |
| 21 | 5.0 | 6 | 34.6 | 35 |
| 21 | 3.02 | 0 | 38.4 | 19 |

As shown in FIG. 1, when Vdd is at the maximum allowable level of 5.0V and the digital baseband signal is not adjusted (without BB backoff), the output power level is 27 dBm. If for some reasons, it is desired to reduce the output power level, Vdd and/or BB backoff may be adjusted. There are different ways to reach a designated output power (e.g., 24 dBm or 21 dBm). One possible way is to adjust (e.g., increase) the BB backoff (and not adjusting the Vdd, and Vdd is kept at the maximum level). The EVM performance is superior in this way. Another possible way is to maintain zero BB backoff and adjust (e.g., lower) the Vdd. The efficiency is superior in this way.

It is further noted that there are additional intermediate settings, such as adjusting both Vdd and BB backoff to achieve a certain Pout level with intermediate values of the efficiency and EVM. Table 1 only exemplarily describes extreme setting scenarios.

This disclosure provides a robust mechanism to deal with various field deployment situations. If for some reasons, e.g. temperature increases or power consumption increases above the infrastructure allowance, then it is required to lower power consumption, i.e. improving efficiency. Then required RF output power level can be achieved by adjusting only the power supply of the SCPA, which can reduce power consumption per the same RF output power level. This can ensure total deployment optimal performance continuity as the RF output power level is critical from the path loss perspective and can affect the ability to reach all clients within the range of the wireless communication device. In this case, the EVM may drop, and consequently the throughput as well, but only minorly. This is the lowest necessary system performance hit. Conventionally, the whole device (or the whole transmission path) is shut down, thus causing a relatively huge system performance hit.

When the operating environment is at regular/normal conditions (e.g., when the power consumption or temperature does not exceed the predefined threshold), the RF output power level may be adjusted by only adjusting the amplitude of the digital baseband signal (BB backoff), which can yield a better signal quality performance (EVM). In this case, the power supply voltage of the SCPA may be set at a maximum level (e.g., at a rated voltage or nominal voltage of the SCPA).

Optionally, before the operation of the wireless communication device 24, a calibration table may be determined and used for adjusting the amplitude of the digital baseband signal and/or the power supply voltage of the SCPA 20. The calibration table may be obtained by the following steps:
- obtaining power supply limit information of the wireless communication device 24; and
- generating the calibration table by scanning internal power consumption of the SCPA 20 through transmitting a plurality of PPDUs, while setting an output power of the wireless communication device 24 corresponding to various amplitude adjustments of the digital baseband signal and various power supply voltage adjustments of the SCPA 20.

The wireless communication device 24 may be a Wi-Fi module or a Wi-Fi AP. The following is an example of deploying one or more wireless communication devices 24 for operation according to this disclosure:
1. Obtaining power supply limits information of the wireless communication devices 24, e.g., from product information, manufacturer, network, etc.
2. During first-time installation, the wireless communication device 24 scans internal power consumption of its SCPA(s) via a series of valid PPDU transmits (e.g. beacon) while setting output power by either adjusting only the Vdd or adjusting only the BB backoff, and builds a calibration table. A manufacturing calibration information may additionally be used.
3. During run time (operation), the wireless communication device 24 uses the power supply and temperature information to calculate optimal transmit configuration (dBm, duration, power consumption, output power adjustment mechanism) to maximize throughput (or any other optimization target, e.g., the best EVM).
4. During operation, the wireless communication device 24 monitors power consumption information (e.g., from its power supply unit) and temperature (e.g., from its temperature sensor) to verify the power and/or the temperature limits are not breached.
5. Optionally, the wireless communication device 24 frequently updates its SCPA power consumption database via dedicated transmissions (such as beacons). This will compensate for temperature and aging changes during operation.
6. When the power consumption or temperature exceeds certain limits or thresholds, wireless communication device 24 changes transmission output settings according to the required consumption reduction (using the calibration table from step 2 above), by using the power control method introduced in this disclosure.

According to this disclosure, an optimal performance of the wireless communication device 24 can be ensured in power limited requirements (Power over Ethernet (PoE), temperature, etc.), and/or under harsh operating environment (e.g., out-door environment or high-temperature environment), and/or under regulatory limitations (e.g., "Green" energy consumption). The setting of transmission output power can be adjusted to prioritize either power consumption efficiency or signal quality performance (EVM). The wireless communication device 24 in the field can actively react to environmental changing situations, such as high temperature, power supply limitations, and so on, with minimal impact on total system performance. Under normal conditions, system performance is maximized.

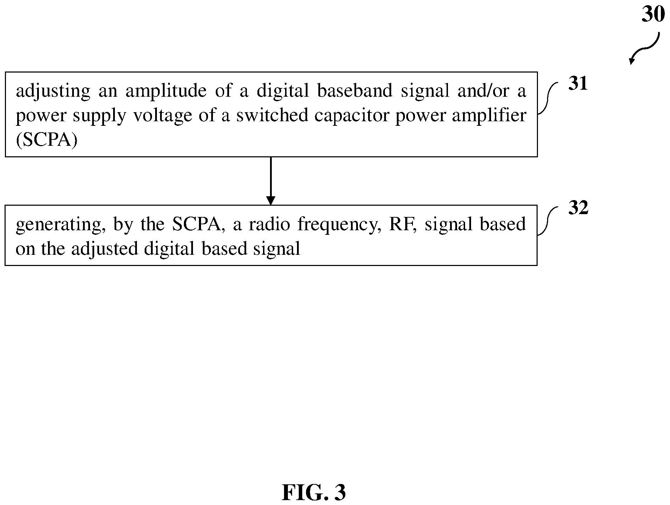

FIG. 3 shows a diagram of a power control method 30 for wireless data transmission according to this disclosure. The method 31 comprises the following steps 31 and 32.

Step 31: adjusting an amplitude of a digital baseband signal and/or a power supply voltage of a SCPA.

Step 32: generating, by the SCPA, an RF signal based on the adjusted digital based signal.

The steps of the method 30 may share the same features introduced above with respect to FIG. 1 and FIG. 2. For instance, step 31 may be performed by the SCPA or by a modem providing the digital baseband signal to the SCPA. In the former case, the method 30 may be applied to the SCPA only, such as the SCPA 10 shown in FIG. 1. In the latter case, the method 30 may be applied to a wireless communication device comprising the modem and the SCPA, such as the wireless communication device 24 shown in FIG. 2.

It is noted that this disclosure may be applied to any SCPA-based wireless data transmission technology.

This disclosure has been described in conjunction with various embodiments as examples as well as implementations. However, other variations can be understood and effected by those persons skilled in the art and practicing the claimed subject matter, from the studies of the drawings, this disclosure and the independent claims. In the claims as well as in the description the word "comprising" does not exclude other elements or steps and the indefinite article "a" or "an" does not exclude a plurality. For example, the user-defined code indicated by the data request may comprise a series of executable binaries and/or commands. A single element or another unit may fulfil the functions of several entities or items recited in the claims. The mere fact that certain measures are recited in the mutual different dependent claims does not indicate that a combination of these measures cannot be used in an advantageous implementation.

## Claims

1. A power control method (30) for wireless data transmission, the method comprising:
adjusting an amplitude of a digital baseband signal and/or a power supply voltage of a switched capacitor power amplifier, SCPA (31); and
generating (32), by the SCPA, a radio frequency, RF, signal based on the digital baseband signal.

2. The method (30) according to claim 1, wherein adjusting the amplitude of the digital baseband signal and/or the power supply voltage of the SCPA comprises:
adjusting the power supply voltage of the SCPA without adjusting the amplitude of the digital baseband signal.

3. The method (30) according to claim 1, wherein adjusting the amplitude of the digital baseband signal and/or the power supply voltage of the SCPA comprises:
adjusting the amplitude of the digital baseband signal without adjusting the power supply voltage of the SCPA.

4. The method (30) according to any one of claims 1 to 3, wherein the SCPA is comprised in a wireless communication device, wherein the wireless communication device comprises a modem configured to generate and provide the digital baseband signal to the SCPA, wherein the amplitude of the digital baseband signal is adjusted by the modem or the SCPA.

5. The method (30) according to any one of claims 1 to 4, wherein the method comprises:
monitoring power consumption and/or temperature of the wireless communication device during operation;
wherein the amplitude of the digital baseband signal and/or the power supply voltage of the SCPA is adjusted when the power consumption or the temperature exceeds a predefined threshold.

6. The method (30) according to claim 5, wherein when the power consumption or temperature does not exceed the predefined threshold, the method comprises adjusting the amplitude of the digital baseband signal while setting the power supply voltage of the SCPA at a maximum level.

7. The method (30) according to claim 5 or 6, wherein before operation, the method comprises:
obtaining power supply limit information of the wireless communication device; and
generating a calibration table by scanning internal power consumption of the SCPA through transmitting a plurality of physical protocol data units, PPDUs, while setting an output power of the wireless communication device corresponding to various amplitude adjustments of the digital baseband signal and various power supply voltage adjustments of the SCPA,
such that when the power consumption or temperature exceeds the predefined threshold during operation, the amplitude of the digital baseband signal and/or the power supply voltage of the SCPA is adjusted based on the calibration table.

8. A switched capacitor power amplifier, SCPA, (10) configured to:
adjust an amplitude of a digital baseband signal (11) and/or a power supply voltage (12) of the SCPA; and
generate a radio frequency, RF, signal (13) based on the digital baseband signal (11).

9. The SCPA (10) according to claim 8, wherein for adjusting the amplitude of the digital baseband signal (11) and/or the power supply voltage (12) of the SCPA, the SCPA (10) is configured to adjust the power supply voltage (12) of the SCPA without adjusting the amplitude of the digital baseband signal (11).

10. The SCPA (10) according to claim 8, wherein for adjusting the amplitude of the digital baseband signal (11) and/or the power supply voltage (12) of the SCPA, the SCPA (10) is configured to adjust the amplitude of the digital baseband signal (11) without adjusting the power supply voltage (12) of the SCPA.

11. A wireless communication device (24) comprising at least one switched capacitor power amplifier, SCPA (20), wherein:
the wireless communication device (24) is configured to adjust an amplitude of a digital baseband signal (21) and/or a power supply voltage of the at least one SCPA (20); and
the at least one SCPA (20) is configured to generate a radio frequency, RF, signal (23) based on the digital baseband signal (21).

12. The wireless communication device (24) according to claim 12, wherein the wireless communication device comprises at least one modem (22) configured to generate and provide the digital baseband signal (21) to the at least one SCPA (20).

13. The wireless communication device (24) according to claim 11 or 12, wherein the wireless communication device (24) is a wireless fidelity, Wi-Fi, module.

14. A communication system comprising at least one wireless communication device according to any one of claims 11 to 13.

15. A computer program product comprising instructions which, when the program is executed by a computer, cause the computer to carry out the method according to any one of claims 1 to 7.

## Amended claims

### Amended claims in accordance with Rule 137(2) EPC.

1. A power control method (30) for wireless data transmission, the method comprising:
adjusting an amplitude of a digital baseband signal and/or a power supply voltage of a switched capacitor power amplifier, SCPA (31); and
generating (32), by the SCPA, a radio frequency, RF, signal based on the digital baseband signal,
wherein the method comprises:
monitoring power consumption and/or temperature of a wireless communication device comprising the SCPA during operation;
wherein the amplitude of the digital baseband signal and/or the power supply voltage of the SCPA is adjusted when the power consumption or the temperature exceeds a predefined threshold,
wherein before operation, the method comprises:
obtaining power supply limit information of the wireless communication device; and
generating a calibration table by scanning internal power consumption of the SCPA through transmitting a plurality of physical protocol data units, PPDUs, while setting an output power of the wireless communication device corresponding to various amplitude adjustments of the digital baseband signal and various power supply voltage adjustments of the SCPA,
such that when the power consumption or temperature exceeds the predefined threshold during operation, the amplitude of the digital baseband signal and/or the power supply voltage of the SCPA is adjusted based on the calibration table.

2. The method (30) according to claim 1, wherein adjusting the amplitude of the digital baseband signal and/or the power supply voltage of the SCPA comprises:
adjusting the power supply voltage of the SCPA without adjusting the amplitude of the digital baseband signal.

3. The method (30) according to claim 1, wherein adjusting the amplitude of the digital baseband signal and/or the power supply voltage of the SCPA comprises:
adjusting the amplitude of the digital baseband signal without adjusting the power supply voltage of the SCPA.

4. The method (30) according to any one of claims 1 to 3, wherein the SCPA is comprised in a wireless communication device, wherein the wireless communication device comprises a modem configured to generate and provide the digital baseband signal to the SCPA, wherein the amplitude of the digital baseband signal is adjusted by the modem or the SCPA.

5. The method (30) according to any one of claims 1 to 4, wherein when the power consumption or temperature does not exceed the predefined threshold, the method comprises adjusting the amplitude of the digital baseband signal while setting the power supply voltage of the SCPA at a maximum level.

6. A wireless communication device (24) comprising at least one switched capacitor power amplifier, SCPA (20), wherein:
the wireless communication device (24) is configured to adjust an amplitude of a digital baseband signal (21) and/or a power supply voltage of the at least one SCPA (20); and
the at least one SCPA (20) is configured to generate a radio frequency, RF, signal (23) based on the digital baseband signal (21),
wherein power consumption and/or temperature of the wireless communication device is monitored during operation, and the wireless communication device (24) is configured to adjust the amplitude of the digital baseband signal and/or the power supply voltage of the SCPA when the power consumption or the temperature exceeds a predefined threshold,
wherein before operation, the wireless communication device is configured to:
obtain power supply limit information; and
generate a calibration table by scanning internal power consumption of the SCPA through transmitting a plurality of physical protocol data units, PPDUs, while setting an output power of the wireless communication device corresponding to various amplitude adjustments of the digital baseband signal and various power supply voltage adjustments of the SCPA,
such that when the power consumption or temperature exceeds the predefined threshold during operation, wireless communication device is configured to adjust the amplitude of the digital baseband signal and/or the power supply voltage of the SCPA based on the calibration table.

7. The wireless communication device (24) according to claim 6, wherein the wireless communication device comprises at least one modem (22) configured to generate and provide the digital baseband signal (21) to the at least one SCPA (20).

8. The wireless communication device (24) according to claim 6 or 7, wherein the wireless communication device (24) is a wireless fidelity, Wi-Fi, module.

9. A communication system comprising at least one wireless communication device according to any one of claims 6 to 8.

10. A computer program product comprising instructions which, when the program is executed by a computer, cause the computer to carry out the method according to any one of claims 1 to 5.
